# EUROPÄISCHE PATENTSCHRIFT

(11) **EP 0 970 453 B1**
(45) Veröffentlichungstag und Bekanntmachung des Hinweises auf die Patenterteilung: **29.08.2001**
(21) Anmeldenummer: 98909353.9
(22) Anmeldetag: 06.02.1998
(51) Int. Cl.: G07G 1/00, G07F 7/00

(54) **WARENERFASSUNGS- UND ABRECHNUNGSEINRICHTUNG**
MERCHANDISE DETECTION AND ACCOUNTING DEVICE
DISPOSITIF D'ENREGISTREMENT ET DE DECOMPTE DE MARCHANDISES

(30) Priorität: 27.02.1997 DE 19708020
(43) Veröffentlichungstag der Anmeldung: 12.01.2000
(73) Patentinhaber: Wincor Nixdorf GmbH & Co KG, 33106 Paderborn (DE)
(72) Erfinder: BAITZ, Günter, D-13503 Berlin (DE); BRÄUER, Dietmar, D-14052 Berlin (DE); SOMMER, Heinz, D-10589 Berlin (DE)
(86) Internationale Anmeldenummer: DE9800342
(87) Internationale Veröffentlichungsnummer: WO9838603

(56) Entgegenhaltungen:
- EP-A- 0 681 273
- WO-A-96/05758
- US-A- 3 428 959
- US-A- 5 186 281
- US-A- 5 468 942

## Beschreibung

Die Erfindung betrifft eine Warenerfassungs- und Abrechnungseinrichtung mit einer Bereitstellungseinheit, in der in einer Vielzahl von Aufnahmen jeweils eine tragbare Warendaten-Erfassungseinheit zur Entnahme durch einen Kunden bereitgehalten wird, wobei die Warendaten-Erfassungseinheit einen Leser für Strichcodemarkierungen und einen Speicher für gelesene Strichcodemarkierungen umfaßt und die Warenerfassungs- und Abrechnungseinrichtung eine Datenverarbeitungseinheit, ein Sichtgerät, einen Bondrucker und eine Halteeinrichtung für Warendaten-Erfassungseinheiten mit einer Datenverbindung enthält, über die in dem Speicher gespeicherte Warendaten aus diesem ausgelesen und der Datenverarbeitungseinheit zugeführt werden können.

Eine Einrichtung der genannten Art ist aus dem Firmenprospekt ZF-GE 5/94 "LST 3803 - Portable Personal Shopper" der Fa. Symbol Technologies Inc., 116 Wilbur Place, Bohemia, New York 11716 bekannt. Danach erhält ein Kunde beim Betreten eines Kaufhauses eine Kundenkarte. Mit dieser meldet sich der Kunde über einen Magnetstreifenleser bei einem "Portable Shopping System" also der Bereitstellungseinheit an, welche daraufhin einen Strichcodeleser mit Datenspeicher -die Warendaten-Erfassungseinheitfreigibt.

Der Kunde liest mit der Warendaten-Erfassungseinheit den Strichcode von jedem zum Kauf ausgewählen Artikel, der in einem Speicher gespeichert wird. Sobald der Kunde seinen Einkauf beendet hat, steckt er die Warendaten-Erfassungseinheit in die Bereitstellungseinheit zurück, wo automatisch ein Kassenbon mit den einzeln aufgeführten Artikeln ausgedruckt wird. Der Kunde muß mit dem Kassenbon zu einer Zahlkasse gehen, wo der auf dem Kassenbon ausgewiesene Betrag kassiert wird.

Es mag sein, daß das gefürchtete Schlangestehen der Kunden bei bedienten Checkout-Plätzen vermieden wird, es liegt aber auf der Hand, daß sich Kundenschlangen nunmehr an den -wegen des höheren Kundendurchsatzes in verringerter Zahl eingerichteten- Zahlkassen bildet.

In der WO-A-96/05758 ist ein System und eine Verfahren zum automatisierten Einkaufen beschrieben. Das System umfaßt ein Scannerterminal, mit einer Vielzahl von Halterungen, in denen jeweils ein Strichcode-Scanner für die Entnahme durch einen Kunden bereitgehalten wird. Jeder Halterung ist ein Kartenleser für Kredit- oder Bezahlkarten zugeordnet.

Beim Betreten des Geschäfts führt der Kunde seine Kredit- oder Bezahlkarte in einen Kartenleser ein. Danach kann der dem Kartenleser zugeordnete Strichcode-Scanner entnommen werden. Die Karte selbst bleibt während des Einkaufens im Kartenleser. Die Artikelcodes der gewünschten Waren werden mit dem Strichcode-Scanner erfaßt und drahtlos zu einem zentralen Computer übertragen. Die Artikelcodes werden zu einem zentralen Warenlager übertragen, wo die ausgewählten Artkel zusammengestellt werden. Zugleich wird deren Preis von der Kredit- oder Bezahlkarte abgebucht. Nach Abschluß des Einkaufs gibt der Kunde den Strichcode-Scanner in die selbe Halterung zurück, aus der er sie entnommen hat, und erhält seine Kredit- oder Bezahlkarte zurück.

In der EP-A-0 681 273 wird eine Ladenanordnung für die selbstbediente Erfassung des Artikelcodes der zum Erwerb ausgewählten Waren und deren elektronische Bezahlung vorgeschlagen. Ein Kunde hat sich beim Betreten des Ladens mit einer ihn identifizierenden Kunden- oder Kreditkarte anzumelden. Darauf wird dem Kunden ein Handscanner zugewiesen, dessen Gerätenummer zusammen mit dem Identifikator in einem zentralen Computer gespeichert wird. Der Kunde erfaßt mit seinem Handscanner die Artikelcodes der ausgewählten Waren, die in einem Speicher des Handscanners gespeichert werden. Zum Ende des Einkaufs deponiert der Kunde seinen Handscanner an einer Rückgabestation, wo der Speicher ausgelesen und dessen Inhalt mit dem im zentralen Computer gespeicherten Identifikator des Kunden zusammengeführt wird. Anschließend begibt sich der Kunde zu einer selbstbedienten Bezahlstation, in die er wiederum seine Kunden- oder Kreditkarte einführen muß. Anhand des aus dieser erneut gelesenen Identifikators wird der Wert des Einkaufs aus dem zentralen Computer abgerufen und der Rechnungsbetrag von der Kunden- oder Kreditkarte abgebucht.

Die aus der EP-A-0 681 273 bekannte Ladenanordnung hat eine Anzahl von zentralen Einrichtungen, die jeder Kunde nacheinander aufsuchen muß: Einen Kartenleser für die Anmeldung, eine Spendestation für Handscanner, eine Rückgabestation für Handscanner und eine Bezahlstation.

Aufgabe der Erfindung ist es daher, ein System der genannten Art vorzuschlagen, bei der die Bildung von Kundenschlangen an einer Zentralstation vermieden wird.

Die Aufgabe wird durch den kennzeichnenden Teil des Anspruchs 1 gelöst.

Weitere Merkmale und Vorteile der Erfindung ergeben sich aus der folgenden Beschreibung, welche in Verbindung mit den beigefügten Zeichnungen die Erfindung anhand eines Ausführungsbeispiels erläutern. Es zeigen
- Fig. 1: eine Warenerfassungs- und Abrechnungseinrichtung in perspektivischer Ansicht,
- Fig. 2: die Warenerfassungs- und Abrechnungseinrichtung in Explosionsdarstellung,
- Fig. 3: ein erstes Ausführungsbeispiel einer Warenerfassungs- und Abrechnungseinrichtung in Seitenansicht,
- Fig. 4: ein zweites Ausführungsbeispiel einer Warenerfassungs- und Abrechnungseinrichtung in Seitenansicht.

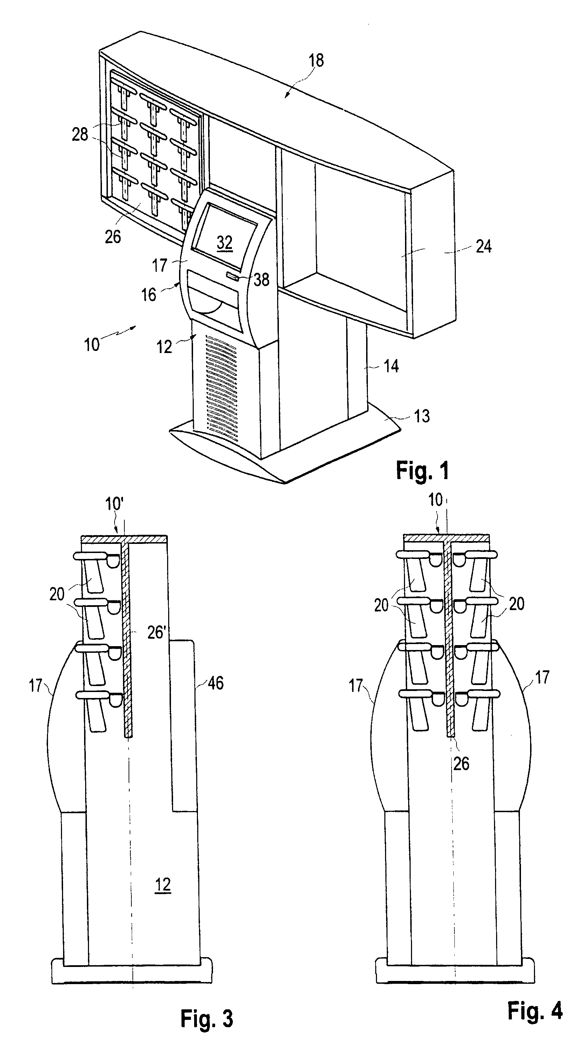

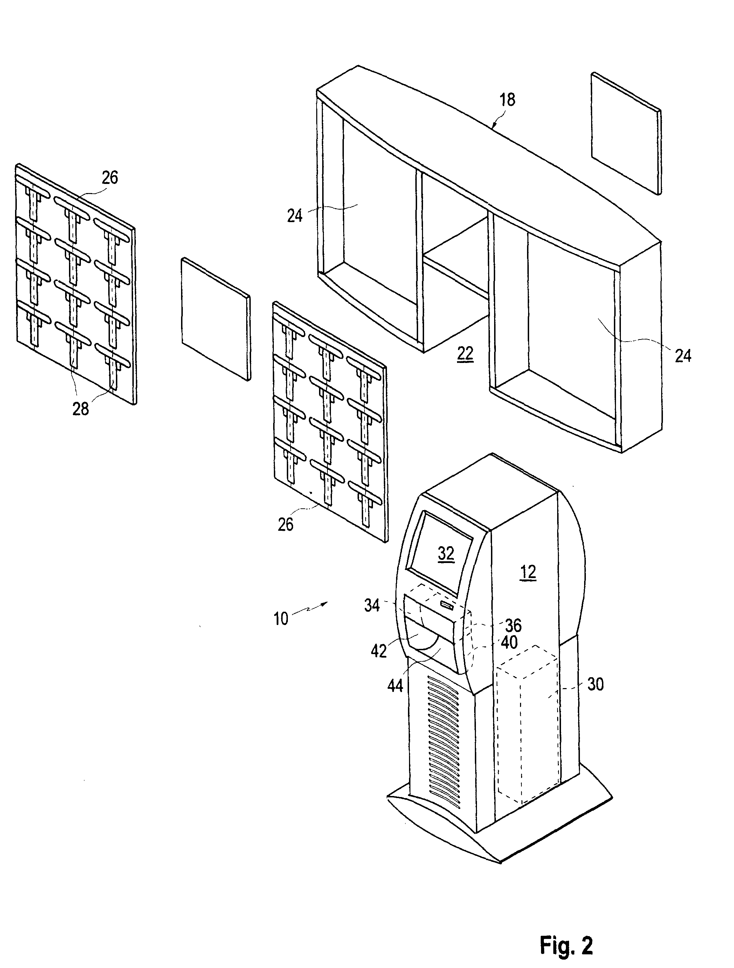

In Fig. 1 ist eine Warenerfassungs- und Abrechnungseinrichtung allgemein mit 10 bezeichnet. Sie besteht aus einer Säule 12 mit einem quaderförmigen Unterteil 14 und Kopfteil 16 mit einer konvex gewölbten Bedienfläche 17.

Die Säule 12 wird von einem gegenüber dieser querschnittsvergrößerten Fuß 13 abgestützt. Auf den Kopfteil 16 ist eine Bereitstellungseinheit 18 für eine Vielzahl von Warendaten-Erfassungseinheiten 20 aufgesetzt.

Die etwa regalförmige Bereitstellungseinheit 18 ist in der Mitte mit einer Aussparung 22 versehen, die den Kopfteil 16 der Säule 12 seitlich bis etwa zu dessen halber Höhe umfaßt. Zu beiden Seiten der Aussparung 22 sind seitliche Fächer 24 angeordnet, in die eine Halteplatte 26 eingelassen ist. Diese wiederum weist eine Vielzahl von Aufnahmen 28 für Warendaten-Erfassungseinheiten 20 auf, deren Form an die der verwendeten Warendaten-Erfassungseinheiten angepaßt ist. Die Warendaten-Erfassungseinheit 20 ist nicht Gegenstand der Erfindung, prinzipiell kann jede transportable Warendaten-Erfassungseinheit verwendet werden. Die Aufnahmen 28 sind mit nicht dargestellten elektromagnetisch lösbaren Riegeln versehen, die die Warendaten-Erfassungseinheiten 20 gegen unbefugte Entnahme sichern.

In dem Unterteil 14 ist ein Personal Computer 30 untergebracht, an den im Kopfteil 16 eingebaute Peripheriegeräte, im Ausführungsbeispiel ein Sichtgerät 32 mit einer Touch-Eingabefläche, ein Bondrucker 34, ein Strichcodeleser 36 und ein Kreditkartenleser 38, angeschlossen sind.

Der Bondrucker 34 und der Strichcodeleser 36 sind in einem unterhalb des Sichtgerätes 32 angeordneten Aufnahmeraum 40 angeordnet, der unten in eine konkav gewölbte, vorne mit einer Öffnung 42 versehene Bonschale 44 übergeht. Der Abtaststrahl des Strichcodelesers 36 ist derart schräg nach unten gerichtet, daß er aus der Öffnung 42 austritt.

Fig. 3 zeigt eine Warenerfassungs- und Abrechnungseinrichtung 10' für einseitige Bedienung in einer geschnittenen Seitenansicht. Es ist zu erkennen, daß nur auf der Vorderseite der Säule 12 ein gewölbtes Bedienfeld 17 vorgesehen ist, während die Rückseite 46 flach ist, so daß die Warenerfassungs- und Abrechnungseinrichtung vor einer Wand aufgestellt werden kann. Die Halteplatte 26' kann nur auf einer Seite Warendaten-Erfassungseinheiten 20 aufnehmen.

Fig. 4 zeigt die Warenerfassungs- und Abrechnungseinrichtung 10 in einer geschnittenen Seitenansicht, welche für zweiseitige Bedienung ausgelegt ist. Auf der Vorder- und Rückseite der Säule 12 ist ein gewölbtes Bedienfeld 17 vorgesehen, so daß die Warenerfassungs- und Abrechnungseinrichtung 10 frei im Raum aufgestellt werden kann. Die Halteplatte 26 kann auf beiden Seiten Warendaten-Erfassungseinheiten 20 aufnehmen.

Der besonders aus Fig. 2 ersichtliche modulare Aufbau der Warenerfassungs- und Abrechnungseinrichtung 10 hat den Vorteil, daß die Säule 12 auch ohne die Bereitstellungseinheit 18 betrieben werden kann. Vollständige Warenerfassungs- und Abrechnungseinrichtungen 10 können dann im Check In/Out-Bereich eines Warenhauses aufgestellt werden, während auf der Verkaufsfläche zwanglos der Kundeninformation dienende Säulen 12 verteilt werden können. Andererseits läßt sich jede Säule 12 nachträglich mit einer Bereitstellungseinheit 18 nachrüsten.

Ein Einkauf in einem Warenhaus, das mit einer erfindungsgemäßen Warenerfassungs- und Abrechnungseinrichtung 10 bzw. 10' ausgestattet ist, läuft wie folgt ab: Ein Kunde entnimmt beim Betreten des Warenhauses eine Warendaten-Erfassüngseinheit 20 aus der Bereitstellungseinheit 18. Mit der Warendaten-Erfassungseinheit 20 liest der Kunde den Strichcode von jedem zum Kauf ausgewählten Artikel, der in einem in die Warendaten-Erfassungseinheit 20 eingebauten Speicher gespeichert wird. Sobald der Kunde seinen Einkauf beendet hat, steckt er die Warendaten-Erfassungseinheit 20 in die Bereitstellungseinheit 18 zurück, wo automatisch der Speicher ausgelesen wird. Die so gewonnenen Warendaten werden, mit der aus einem PLU-Speicher ausgelesenen Artikelbezeichnung und der zugehörigen Preisangabe ergänzt, auf dem Sichtgerät 32 angezeigt. Auf die Berührung eines mit "Rechnungsabschluß" bezeichneten Touchfeldes auf dem Sichtgerät 32 wird die Endsumme angezeigt. Der Kunde wird nun aufgefordert, die gewünschte Zahlungsweise anzugeben. Im Regelfall wird dies Zahlung mit Kredit- oder Geldkarte sein und der Kunde wird gebeten, in den Kreditkartenleser seine Karte einzugeben, von der dann der Rechnungsbetrag abgebucht wird. Danach wird als Zahlungsbeleg ein Kassenbon mit den einzeln aufgeführten Artikeln und dem Endbetrag ausgedruckt und ein Ausgang aus dem Warenhaus freigegeben. Wünscht der Kunde Barzahlung, wird ebenfalls ein Kassenbon gedruckt, der Ausgang aber nicht freigegeben. Mit dem Kassenbon muß der Kunde in bekannter Weise zu einer Zahlkasse gehen, wo der auf dem Kassenbon ausgewiesene Betrag kassiert wird.

Mit Hilfe des in die Säule 12 eingebauten Strichcodelesers 36 wird es einem eiligen oder zu einem spontanen Kauf entschlossenen Kunden ermöglicht Artikel einzukaufen, ohne beim Betreten des Warenhauses eine Warendaten-Erfassungseinheit 20 mitzunehmen. Er kann vielmehr die Warendaten direkt an der Warenerfassungs- und Abrechnungseinrichtung 10 erfassen.

## Patentansprüche

1. Warenerfassungs- und Abrechnungseinrichtung (10) mit einer Bereitstellungseinheit (18), in der in einer Vielzahl von Aufnahmen (28) jeweils eine tragbare Warendaten-Erfassungseinheit (20) zur Entnahme durch einen Kunden bereitgehalten wird, wobei
die Warendaten-Erfassungseinheit (20) einen Leser für Strichcodemarkierungen und einen Speicher für gescannte Strichcodemarkierungen umfaßt,
die Warenerfassungs- und Abrechnungseinrichtung (10) eine Datenverarbeitungseinheit (30), ein Sichtgerät (32), einen Bondrucker (34) und eine Halteeinrichtung (26) für Warendaten-Erfassungseinheiten (20) mit einer Datenverbindung enthält, über die in dem Speicher gespeicherte Warendaten aus diesem ausgelesen und der Datenverarbeitungseinheit (30) zugeführt werden können,
**dadurch gekennzeichnet,**
daß die Warenerfassungs- und Abrechnungseinrichtung (10) eine Annahmeeinheit (38) für Zahlungen des Kunden umfaßt, welche unmittelbar nach der Rückgabe einer Warendaten-Erfassungseinheit (20) in die Bereitstellungseinheit (18) und nach der Auswahl einer die Annahmeeinheit (38) benötigenden Zahlungsweise dieser Warendaten-Erfassungseinheit (20) für die Abwicklung eines Bezahlvorgangs zugeordnet wird.

2. Anordnung nach Anspruch 1, **dadurch gekennzeichnet**, daß die Warenerfassungs- und Abrechnungseinrichtung (10) von mehr als einer Seite bedienbar ist, wobei jede Seite eine Vielzahl von Aufnahmen (28), ein Sichtgerät (32), einen Bondrucker (34) und eine Halteeinrichtung (26) für Warendaten-Erfassungseinheiten (20) und eine Annahmeeinheit (38) für Zahlungen enthält.

## Claims

1. Merchandise registering and accounting device (10) having a provision unit (18), in which, in a multiplicity of receptacles (28), a portable merchandise data acquisition unit (20) is in each case kept ready for removal by a customer, where
the merchandise data acquisition unit (20) comprises a reader for bar-code markings and a memory for scanned bar-code markings,
the merchandise registering and accounting device (10) contains a data processing unit (30), a visual display unit (32), a receipt printer (34) and a holding device (26) for merchandise data acquisition units (20) with a data link via which merchandise data stored in the memory can be read from the latter and fed to the data processing unit (30),
**characterized**
**in that** the merchandise registering and accounting device (10) comprises an acceptance unit (38) for customer payments, which acceptance unit, immediately after the return of a merchandise data acquisition unit (20) to the provision unit (18) and after the selection of a method of payment requiring the acceptance unit (38), is assigned to the said merchandise data acquisition unit (20) for the handling of a payment process.

2. Arrangement according to Claim 1, **characterized in that** the merchandise registering and accounting device (10) can be operated from more than one side, each side containing a multiplicity of receptacles (28), a visual display unit (32), a receipt printer (34) and a holding device (26) for merchandise data acquisition units (20) and an acceptance unit (38) for payments.

## Revendications

1. Dispositif (10) d'enregistrement et de règlement de marchandises, comportant une unité (18) de mise à disposition dans laquelle des unités (20) portables d'enregistrement de données de marchandises sont tenues à disposition dans une pluralité de réceptacles (28) pour être retirées par des clients,
l'unité (20) d'enregistrement de données de marchandises comprenant un lecteur de marquages en codes barres et une mémoire pour les marquages scannés,
le dispositif (10) d'enregistrement et de règlement de marchandises comportant une unité (30) de traitement de données, un appareil (32) de visualisation, une imprimante (34) de tickets et un dispositif (26) de support d'unités (20) d'enregistrement de données de marchandises, pourvu d'une liaison de données par l'intermédiaire de laquelle les données de marchandises enregistrées dans la mémoire peuvent être extraites de celle-ci et apportées à l'unité (30) de traitement de données,
**caractérisé en ce que** le dispositif (10) d'enregistrement et de règlement de marchandises comprend une unité (38) de réception de paiements des clients, unité qui, juste après la restitution d'une unité (20) d'enregistrement de données de marchandises dans l'unité (18) de mise à disposition et la sélection d'un mode de paiement faisant appel à l'unité (38) de réception, est associée à cette unité (20) d'enregistrement de données de marchandises pour le déroulement d'un processus de paiement.

2. Dispositif suivant la revendication 1, **caractérisé en ce que** le dispositif (10) d'enregistrement et de règlement de marchandises peut être utilisé par plus d'un côté, chaque côté comportant une pluralité de réceptacles (28), un appareil (32) de visualisation, une imprimante (34) de tickets, un dispositif (26) de support d'unités (20) d'enregistrement de données de marchandises et une unité (38) de réception de paiements.
